# EUROPÄISCHE PATENTSCHRIFT

(11) **EP 0 476 260 B1**
(45) Veröffentlichungstag und Bekanntmachung des Hinweises auf die Patenterteilung: **19.04.1995**
(21) Anmeldenummer: 91112064.0
(22) Anmeldetag: 18.07.1991
(51) Int. Cl.: B62H 5/00, E05B 67/00, E05B 71/00

(54) **Halterungseinrichtung Stichwort: Kabelschlossbefestigung an einem Zweiradrahmen**
Fixation device key word: Cable lock fixing on a two-wheel frame
Dispositif de fixation mot clef : Fixation d'un câble sur un cadre de bicyclette

(30) Priorität: 17.09.1990 DE 9013188 U
(43) Veröffentlichungstag der Anmeldung: 25.03.1992
(73) Patentinhaber: Aug. Winkhaus GmbH & Co. KG, D-48291 Telgte (DE)
(72) Erfinder: Kortenbrede, Ludger, W-4404 Telgte (DE)
(74) Vertreter: Weickmann, Heinrich, Dipl.-Ing.

(56) Entgegenhaltungen:
- DE-A- 876 220
- DE-A- 3 018 544
- US-A- 3 922 894

## Beschreibung

Die Erfindung betrifft eine Halterungseinrichtung zur Halterung eines Ringschlosses an einem Zweiradrahmen, wobei das Ringschloß einen flexiblen Strang sowie je ein Kupplungselement an beiden Enden des flexiblen Strangs aufweist und wobei die beiden Kupplungselemente für das Sichern des jeweiligen Zweirades miteinander kuppelbar sind.

Ringschlösser haben gegenüber anderen zur Sicherung eines Zweirades verwendeten Schlössern den Vorteil, daß sie zur Sicherung des Zweirades aufgrund des flexiblen Strangs um ganz unterschiedlich geformte Gegenstände und um die verschiedensten Teile des Zweirades geschlungen werden können. Die Form des Gegenstandes spielt dabei nur insofern eine Rolle, daß nach dem Herumschlingen des flexiblen Strangs um einen nach Möglichkeit ortsfesten Gegenstand und um ein vorteilhafterweise rahmenfestes Teil des Zweirades die beiden Kupplungselemente noch miteinander verbindbar sind. Je größer dabei die Länge des Strangs ist, desto flexibler läßt sich das Ringschloß einsetzen. Eine große Stranglänge birgt jedoch den Nachteil, daß die Anbringung des Kabelschlosses an dem Zweiradrahmen bei Nichtgebrauch nicht unproblematisch ist. Üblicherweise werden in der Praxis Ringschlösser dadurch am Zweirad bei Nichtgebrauch gehalten, daß sie entweder einfach um ein Teil des Zweirades geschlungen und anschließend die beiden Kupplungselemente miteinander gekuppelt werden, oder aber sie werden von einer speziellen Halterungseinrichtung in der Weise gehalten, daß der Strang eine aufgewickelte Spirale oder eine Schlaufe bildet. Dabei kann bei miteinander verrasteten Kupplungselementen der Strang je nach seiner Länge eine relativ große, störende Schlaufe bilden, wobei dann die Gefahr besteht, daß diese Schlaufe eine Benutzung des Zweirades beeinträchtigt oder sogar stört. Darüber hinaus kann bei einem Strang, der zwar flexibel aber trotzdem eine verhältnismäßig große Steifigkeit beispielsweise aufgrund eines verhältnismäßig großen Strangdurchmessers aufweist, ebenfalls eine Anbringung an dem Zweiradrahmen erschwert sein.

Aus der DE-PS 33 35 662 ist eine Halterungseinrichtung für ein Ringschloß bekannt, die aus einer an dem Zweiradrahmen anbringbaren Ringöse besteht. Die beiden Kupplungselemente werden bei Nichtgebrauch des Ringschlosses in der Ringöse miteinander verriegelt, so daß das eine Schlaufe bildende Ringschloß insgesamt durch die Ringöse gehalten ist.

Darüber hinaus geht aus der DE-PS 483 863 ein Kabelschloß hervor, bei dem das eine Ende des Kabels mit einem Bügelschnappschloß versehen ist und das andere an einem Sattelrohr eines Fahrradrahmens mittels einer Klemmschelle unlösbar, aber entlang des Sattelrohrs verschieblich angebracht ist. Bei Nichtgebrauch wird das Bügelschnappschloß am Tretlager des Fahrrades festgelegt, wogegen die Klemmschelle entlang des Sattelrohrs soweit in Richtung des Sattels verschoben wird, bis das Kabel eine gestreckte Lage einnimmt. Zum Sichern des Fahrrades wird dagegen das Bügelschnappschloß von dem Tretlager abgenommen und die Klemmschelle entlang des Sattelrohrs soweit verschoben, bis das Bügelschnappschloß an einem ortsfesten Gegenstand angebracht werden kann. Das Kabelschloß ist also an seinem einen Ende lösbar und an seinem anderen Ende unlösbar an dem Fahrrad gehaltert. Abgesehen davon, daß sich dieses Kabelschloß nicht so flexibel einsetzen läßt, wie ein von dem Zweiradrahmen vollständig abnehmbares Ringschloß, bedarf die teils lösbare, teils unlösbare Halterung des Kabelschlosses einer Reihe von Handhabungsvorgängen, um die Gebrauchsbereitschaft des Kabelschlosses herzustellen bzw. das Kabelschloß nach dem Gebrauch wieder an dem Fahrradrahmen anbringen zu können. Darüber hinaus ist dieses bekannte Kabelschloß an einer Stelle an dem Fahrradrahmen gehaltert, an der üblicherweise die Fahrradpumpe angebracht wird.

Aus der US-PS 4 945 739 ist eine Ausführung eines Kabelschlosses bekannt, bei welcher ein Ende des Schließkabels dauernd am Sattelrohr befestigt ist und das andere Ende vom Sattelrohr lösbar ist, wobei die Länge des Schließkabels so bemessen ist, daß es lediglich um die Felge des Hinterrads herumgeschlungen werden kann.

Schließlich ist aus der US-PS 4 028 916 ein Ringschloß bekannt, bei dem das eine Ende des gewendelten Stranges fest am horizontalen Querrohr angebracht ist und das andere Ende nahe der Verankerung des einen Endes am Querrohr durch einen Schlüsselmechanismus festlegbar ist.

Es ist Aufgabe der vorliegenden Erfindung, eine Halterungseinrichtung der eingangs genannten Art zu schaffen, mit der Ringschlösser an dem Zweiradrahmen in einer einfach zu handhabenden Weise unabhängig von der Länge oder dem Grad an Flexibilität ihres jeweiligen Strangs gehaltert werden können.

Vorstehende Aufgabe wird dadurch gelöst, daß an voneinander beabstandeten Stellen des Zweiradrahmens Halterungselemente für das Ringschloß angebracht sind, von denen mindestens eines zum Einkuppeln eines der beiden Kupplungselemente ausgebildet ist. Zur Lösung dieser Aufgabe gehören auch die Halterungselemente einer solchen Halterungseinrichtung, insbesondere diejenigen, die zum Einkuppeln eines Kupplungselements ausgebildet sind und so gestaltet sein können, daß sie beispielsweise im Rahmen einer Nachrüstung an dem Zweiradrahmen befestigt werden können.

Bei der erfindungsgemäßen Halterungseinrichtung läßt sich das Kabelschloß an beliebiger Stelle eines Fahrradrahmens verlegen und zwar so, daß der flexible Strang wenigstens auf einem Teil seiner Länge in der Nähe von Rahmenrohren verläuft und auch die Kupplungsteile den jeweiligen Rahmenrohren benachbart sind. Auf diese Weise kann erreicht werden, daß das gesamte Ringschloß sich an einer Stelle befindet, an der es den Benutzer des Fahrrads nicht stört und an der es auch nicht in Konflikt mit anderen Zubehörteilen kommt. Dabei kann die Länge des flexiblen Stranges beliebig groß gewählt werden, weil der flexible Strang entlang an einander anschließenden Rahmenrohren verlegt werden kann. Es bedarf also keiner Ringgestalt des flexiblen Stranges in der Mitführstellung. Der flexible Strang kann in sich elastisch sein und die Tendenz haben, sich zu einem geradlinig gestreckten Gebilde zu strecken, wenn die Kupplungselemente voneinander gelöst werden, so daß das Schließkabel leichter zu handhaben ist, als ein Schließkabel vergleichbarer Länge, wie man es bisher in gewendelter Form bereitgestellt hat.

Dadurch, daß mindestens eines der Halterungselemente für das Ringschloß zum Einkuppeln eines der beiden Kupplungselemente ausgebildet ist, wird erreicht, daß die Position des Ringschlosses am Fahrradrahmen eindeutig festgelegt werden kann.

Nach einer Weiterbildung der Erfindung ist vorgesehen, daß jedem der beiden Kupplungselemente ein deren Einkuppeln gestattendes Halterungselement zugeordnet ist. Damit ist die Lage des Ringschlosses am Fahrradrahmen eindeutig festgelegt. Es ist aber auch denkbar, den flexiblen Strang auf mindestens einem Teil seiner Länge festzulegen. Auf diese Weise kann eine gegebene Halterungseinrichtung für Ringschlösser unterschiedlicher Stranglänge eingesetzt werden. Weiterhin ist es möglich, zwischen den beiden Enden des flexiblen Stranges ein zusätzliches Halterungselement vorzusehen, welches dazu beiträgt, dem flexiblen Strang einen bestimmten Verlauf entlang eines Rahmenrohrs oder insbesondere entlang einer Folge von gegeneinander geneigten Rahmenrohren aufzuzwingen.

Das mindestens eine zum Einkuppeln eines Kupplungselements ausgebildete Halterungselement kann in Anpassung an das jeweils andere Kupplungselement komplementär zu dem einen Kupplungselement ausgebildet sein. Dadurch wird zum einen erreicht, daß der Benutzer nur eine Kupplungstätigkeit erlernen muß, zum anderen wird erreicht, daß der Fabrikant Komponenten des jeweils anderen Kupplungselements zur Herstellung eines Halterungselements heranziehen kann.

In der Regel ist eines der beiden Kupplungselemente mit einer Schloßeinrichtung versehen, etwa einem Zylinderschloß oder einem Nummernschloß. Um nun das unbefugte Entnehmen des Ringschlosses von einem Fahrradrahmen zu überwinden, wird vorgeschlagen, daß das mit der Schloßeinrichtung versehene Kupplungselement vermittels der Schloßeinrichtung an dem zugehörigen Halterungselement festgestellt wird, so daß es nur bei Betätigung der Schloßeinrichtung durch Stecken eines Schlüssels oder Einstellung eines Schließgeheimnisses von diesem Halterungselement lösbar ist. Das andere der beiden Kupplungselemente kann dann an dem zugehörigen Halterungselement reibschlüssig oder durch Verrastung lösbar feststellbar sein. Ist neben der Befestigung des flexiblen Stranges an seinen Enden eine weitere Befestigung vorgesehen, so benutzt man bevorzugt ein Fesselungselement, in welches zur Vereinfachung der Handhabung der flexible Strang quer zu seiner Längsrichtung eingelegt werden kann.

Im Hinblick auf eine den Benutzer des Fahrzeugs nicht störende Anbringung wird empfohlen, daß der flexible Strang im wesentlichen parallel zu einer Hauptebene des Zweiradrahmens verläuft, und zwar bevorzugt so, daß mindestens ein Teilabschnitt des Stranges parallel zu mindestens einem Rahmenrohr verläuft. Dieser Parallelverlauf kann insbesondere durch ein Fesselungselement stabilisiert werden, und zwar vorzugsweise ein solches, in welches der Strang quer zu seiner Längsrichtung eingelegt werden kann.

Zur Erzwingung des Parallelverlaufs des Stranges in bezug auf ein Rahmenrohr kann auch wenigstens eines der Kupplungselemente unverdrehbar am zugehörigen Halterungselement festgestellt werden.

Bei Herrenrädern kann von den Halterungselementen eines an einem Sattelrohr und eines an einem horizontalen Querrohr angebracht werden. Daneben ist es - insbesondere bei Damenrädern - möglich, von den Halterungselementen eines an einem Sattelrohr und ein weiteres an einem das Tretlager und das Lenklager verbindenden Schrägrohr anzubringen.

Eine für den Benutzer des Fahrrads besonders störungsfreie Lokalisierung des Ringschlosses erreicht man, wenn der flexible Strang und die zugehörigen Kupplungselemente möglichst weitgehend innerhalb einer durch die Rahmenrohre eingeschlossenen Raumscheibe liegen. Es ist aber auch möglich, den Strang und die Kupplungselemente in einer dem Fahrradrahmen parallel benachbarten Raumscheibe unterzubringen.

Die Halterungselemente werden, falls sie zur Kupplung mit einem Kupplungselement bestimmt sind, komplementär zu dem jeweiligen vorgegebenen Kupplungselement ausgeführt. Beispielsweise ist es möglich, daß bei Ausführung eines Kupplungselements mit einem Kernteil sowie radial aus diesem Kernteil ausfahrbaren Schloßriegeln und Ausführung des anderen Kupplungselements mit einem das Kernteil aufnehmenden und von den Schloßriegeln im Bereich einer Randeinengung hintergreifbaren Hülsenteil das dem einen Kupplungselement zugehörige Halterungselement als entsprechende Halterungshülse ausgebildet ist.

Weiterhin ist es möglich, daß bei Ausführung eines Kupplungselements mit einem Kernteil sowie radial aus diesem Kernteil ausfahrbaren Schloßriegeln und Ausführung des anderen Kupplungselements mit einem das Kernteil aufnehmenden und von den Schloßriegeln im Bereich einer Randeinengung hintergreifbaren Hülsenteil das dem anderen Kupplungselement zugehörige Halterungselement mit einem entsprechenden Halterungskern ausgebildet und mit radial beweglichen Verrastungsmitteln ausgeführt ist.

Im letzteren Fall ist es insbesondere denkbar, daß der Halterungskern an einander im wesentlichen diametral gegenüberliegenden Stellen mit einer kernfesten Klaue und mit einer radial einwärts gegen Federkraft verschiebbaren Klaue ausgeführt ist, daß Einweisungsflächen an dem Hülsenteil und/oder an den Klauen des Halterungskerns angebracht sind, welche ein Aufstecken des Hülsenteils auf den Halterungskern gestatten, daß das Hülsenteil zum Lösen von dem Halterungskern gegenüber diesem in Richtung einer Verbindungslinie der beiden Klauen gegen die Wirkung der federvorgespannten Klaue verschiebbar ist und daß an der beweglichen Klaue und/oder dem Hülsenteil gegebenenfalls Ausrastflächen vorgesehen sind.

Alternativ hierzu ist es auch denkbar, daß die Verrastungsmittel mit manuell betätigbaren Löseorganen verbunden sind. Diese letztere Ausführungsform verdient den Vorzug, weil Sie eine besser gesicherte Verbindung schafft.

Dabei ergibt sich eine besonders einfache Handhabung, wenn zwei einander diametral gegenüberliegende gegen Federkraft ausrückbare Klauen mit je einem Löseorgan verbunden sind.

Der flexible Strang kann von einem Kabel, insbesondere einem Stahldrahtkabel, gebildet sein, welches in eine Ruhegeometrie, insbesondere eine lineare Ruhegeometrie, vorgespannt ist. Hierdurch kann die Handhabung erleichtert und die exakte Positionierung im Fahrradrahmen verbessert werden.

Die Einführung des einen Strangendes in eine reibschlüssige Rohraufnahme ist insbesondere dann möglich und vorteilhaft, wenn an dem einen Strangende ein schlanker Schließdorn zur Verfügung steht, der nicht über den Durchmesser des Strangs wesentlich vorsteht. Selbstverständlich ist es auch in einem solchen Fall immer noch möglich, am Grunde einer als Einsteckrohr ausgebildeten Halterung eine Verrastung für den Schließdorn vorzusehen.

Es ist auch möglich, ein Halterungselement mit einer schlüsselbetätigten Schließeinrichtung oder mit einem Nummernschloß zu versehen, um dasjenige Ende eines Strangs unlösbar festlegen zu können, welches nicht von Haus aus mit einer Schließvorrichtung versehen ist.

Es ist auch denkbar, den Strang zwischen seinen beiden Enden ein- oder mehrfach um ein Rahmenrohr zu winden, um ihm einen gewünschten Verlauf aufzuzwingen.

Mit der erfindungsgemäßen Halterungseinrichtung können ganz unterschiedlich aufgebaute Ringschlösser an dem Zweiradrahmen gehalten werden. So besteht beispielsweise die Möglichkeit, daß mit der Halterungseinrichtung ein Kabelringschloß gehalten werden soll, dessen eines Kupplungselement ein ein Schließwerk aufnehmendes Schließgehäuse ist und dessen anderes Kupplungselement ein in das Schließgehäuse einführbarer sowie mit dem Schließwerk lösbar verrastbarer Schließkloben ist. Dabei kann das für den Schließkloben vorgesehene Halterungselement eine an dem Zweiradrahmen anbringbare oder angebrachte Büchse sein, in die der Schließkloben eingeschoben werden kann. Das andere Halterungselement kann dann als ein dem Schließkloben nachgebildeter Zapfen ausgeführt sein, auf den das Schließgehäuse aufsteckbar ist, wobei das Schließwerk mit dem Zapfen verrastet und das Schließgehäuse durch Betätigung des Schließwerks von dem Zapfen abnehmbar ist. Hierbei besteht zusätzlich die Möglichkeit, daß die Halterungsbüchse für den Schließkloben eine solche Länge aufweist, daß ein Teil des Kabels in diese Büchse eingeschoben werden kann, wodurch sich ggf. ein zusätzlich vorzusehendes Fesselungselement erübrigt.

Weitere vorteilhafte Ausgestaltungen sowie ein Ausführungsbeispiel werden nachstehend an Hand der Zeichnung erläutert. Es zeigt:
- Fig. 1a: eine erste Anbringungsmöglichkeit einer erfindungsgemäßen Halterungseinrichtung für ein Ringschloß an einem Zweiradrahmen;
- Fig. 1b: eine zweite Anbringungsmöglichkeit der Halterungseinrichtung gemäß Fig. 1a;
- Fig. 2: ein erstes, vergrößert dargestelltes Halterungselement der Halterungseinrichtung gemäß den Fig. 1a, 1b mit einem darin festgestellten Kupplungselement des in der Halterungseinrichtung gehaltenen Ringschlosses;
- Fig. 2a bis 2d: verschiedene Ansichten, teilweise geschnitten, des ersten Halterungselements gemäß Fig. 2;
- Fig. 3a,b: ein zweites Halterungselement der Halterungseinrichtung gemäß den Fig. 1a, 1b mit einem darin festgelegten, weiteren Kupplungselement des Ringschlosses;
- Fig. 3c bis 3f: verschiedene Ansichten, teilweise geschnitten, des zweiten Halterungselements gemäß den Fig. 3a, 3b, wobei eine radial verschiebliche Klaue entfernt worden ist;
- Fig. 4: einen Schnitt entlang der Linie IV-IV in Fig. 3a mit herausgenommenem zweiten Kupplungselement; und
- Fig. 5a bis 5e: verschiedene Ansichten, teilweise geschnitten, eines Fesselungselements der Halterungseinrichtung gemäß den Fig. 1a, 1b;
- Fig. 6: eine weitere Ausbildung der Halterungseinrichtung, bei welcher der flexible Strang in der Raumscheibe des Fahrradrahmens verlegt wird;
- Fig. 7: eine weitere Ausführungsform, bei welcher das eine Ende des flexiblen Strangs von einem Einsteckrohr aufgenommen ist;
- Fig. 8: einen Schnitt nach Linie VIII-VIII der Figur 7;
- Fig. 9: ein modifiziertes Halterungselement mit manuell betätigbarer Verrastung;
- Fig. 10: einen Schnitt entlang der Linie X-X in Figur 9;
- Fig. 11: ein Halterungselement nach Figur 10 mit eingesetztem Kupplungselement und gelöster Verrastung und
- Fig. 12: ein Halterungselement gemäß Figur 10 mit eingerastetem Kupplungselement.

In Fig. 1a ist eine erfindungsgemäße Halterungseinrichtung 10 gezeigt, die an einem Fahrradrahmen 12 angebracht ist und zur Halterung eines Kabelringschlosses 14 dient. Der Fahrradrahmen 12 ist durch ein Sattelrohr 12a, durch ein das Sattelrohr 12a mit einem Lenklager 12b verbindenden, im wesentlichen horizontal verlaufenden Querrohr 12c und durch ein ein Tretlager 12d mit dem Lenkerlager 12b verbindenden Schrägrohr 12e gebildet.

Das durch die Halterungseinrichtung 10 gehalterte Kabelringschloß 14 umfaßt ein im wesentlichen flexibles, einen Strang bildendes Kabel 14a, an dessen einem Ende ein erstes Kupplungselement 14b und an dessen anderem Ende ein zweites Kupplungselement 14c angebracht ist. Das erste und das zweite Kupplungselement 14b,14c sind dabei so ausgebildet, wie in der DE-PS 30 18 544 dargestellt. Hierbei ist das erste Kupplungselement 14b mit einer nicht weiter gezeigten Schloßeinrichtung versehen.

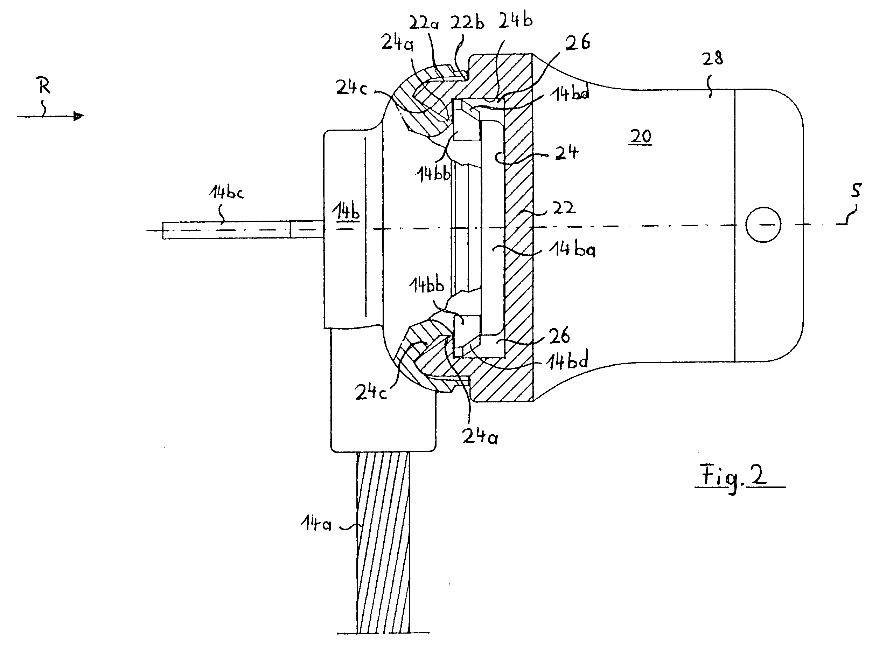

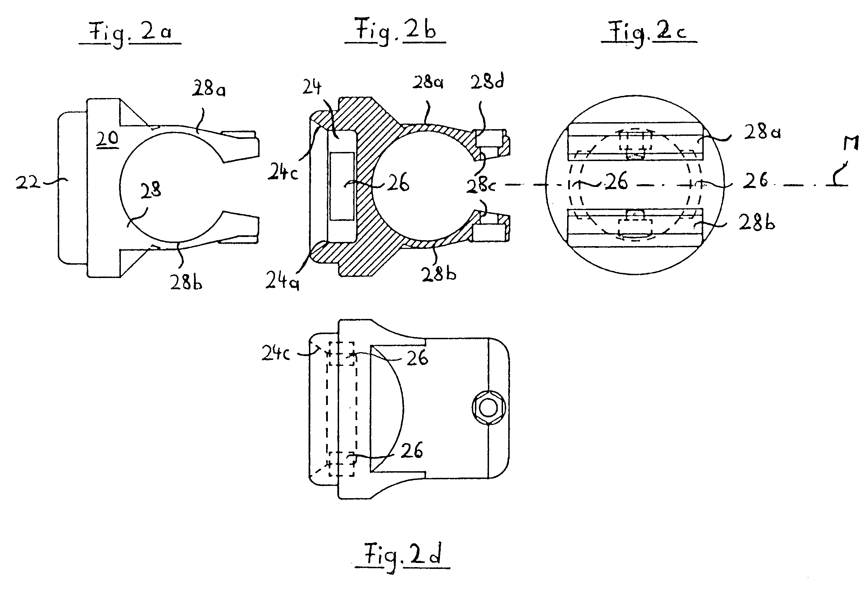

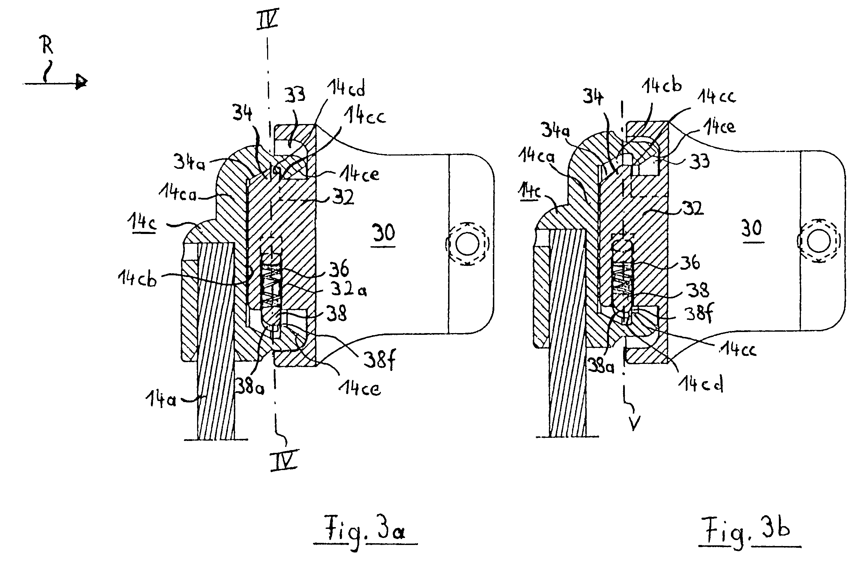

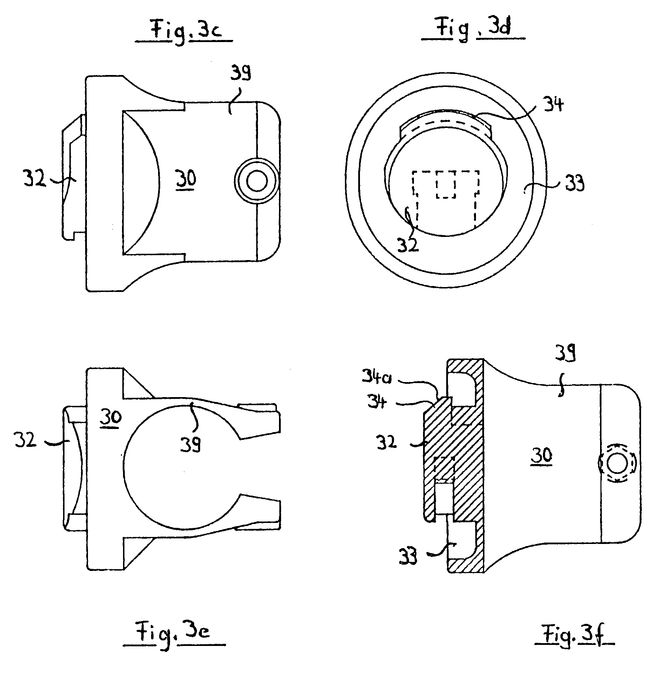

Wie aus Fig. 1a hervorgeht, ist das erste Kupplungselement 14b durch ein in Fig. 1a durch das erste Kupplungselement 14b verdecktes, erstes Halterungselement 20 (vgl. auch Fig. 2) an dem horizontalen Querrohr 12c und das zweite Kupplungselement 14c über ein durch das zweite Kupplungselement 14c ebenfalls verdecktes, zweites Halterungselement 30 (vgl. auch Fig. 3a,3b) an dem Sattelrohr 12a festgelegt. Gegebenenfalls kann der flexible Strang 14a durch ein in Fig. 1a als nur schematisch angedeutetes Fesselungselement 40 an dem Querrohr 12c zusätzlich festgelegt sein.

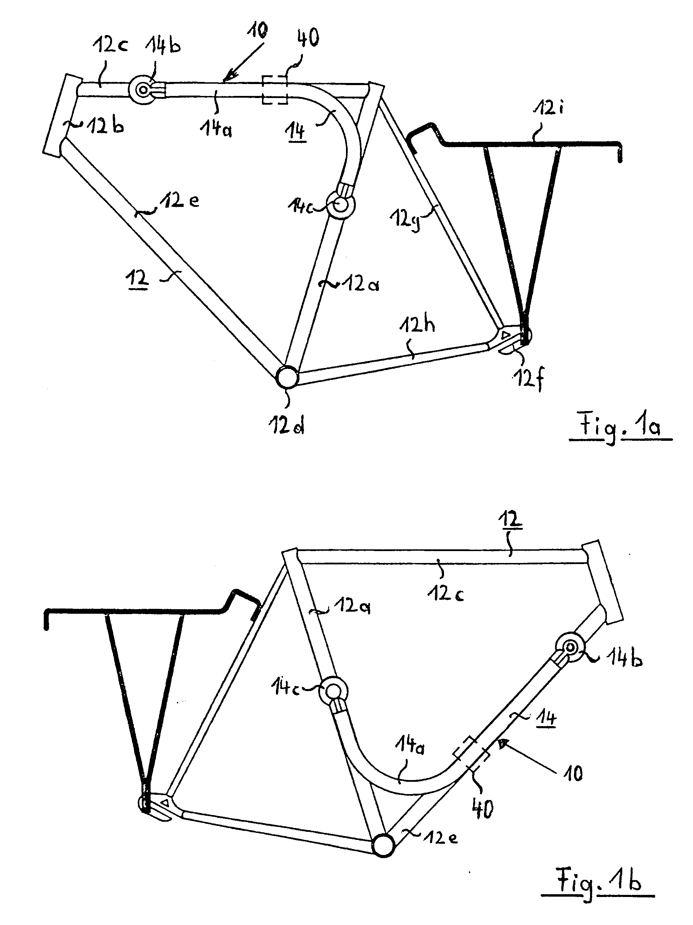

In Fig. 1b ist eine weitere Anbringungsmöglichkeit des Kabelringschlosses 14 durch die erfindungsgemäße Halterungseinrichtung 10 gezeigt. Hierbei ist das erste Kupplungselement 14b durch das erste Halterungselement 20 an dem Schrägrohr 12e und das zweite Kupplungselement 14c durch das zweite Halterungselement 30 an dem Sattelrohr 12a festgelegt. Auch hier kann wieder zusätzlich das Fesselungselement 40 vorgesehen werden, das in diesem Fall an dem Schrägrohr 12e angebracht ist.

Die Anbringungsmöglichkeit gemäß Fig. 1a der Halterungseinrichtung 10 eignet sich vor allem für sog. "Herren-Fahrräder", da diese ein horizontales Querrohr 12c aufweisen. Demgegenüber eignet sich die in Fig. 1b dargestellte Anbringungsmöglichkeit der Halterungseinrichtung 10 für sog. "Damen-Fahrräder", da bei diesen ein horizontales Querrohr 12c fehlt.

Wie aus den Fig. 1a und 1b hervorgeht, ist das Kabelringschloß 14 in beiden Fällen seitlich einer durch das Sattelrohr 12a, das Querrohr 12c und das Schrägrohr 12e bestimmten Hauptebene des Fahrradrahmens 12 angeordnet. In dieser Hauptebene ist dabei das Kabelringschloß 14 so von der Halterungseinrichtung 10 gehalten, daß das flexible Kabel 14a parallel zu der Hauptebene und parallel sowohl zu dem Sattelrohr 12a als auch parallel zu dem Querrohr 12c bzw. dem Schrägrohr 12e verläuft und daß das erste und zweite Kupplungselement 14b,14c entlang jeweils einer senkrecht zu der Hauptebene verlaufenden Steckachse S des ersten und zweiten Halterungselements 20,30 in diese ein- bzw. aufsteckbar ist.

Wie aus den Fig. 1a und 1b ebenfalls hervorgeht, bildet das flexible Kabel 14a bei seinem Übergang von dem Sattelrohr 12a zu dem Querrohr 12c bzw. zum dem Schrägrohr 12e einen Bogen mit einem verhältnismäßig großen Radius, so daß eine Schädigung des flexiblen Kabels 14a ausgeschlossen ist. Das erste und zweite Halterungselement 20,30 sowie das erste und zweite Kupplungselement 14b,14c werden nachstehend im Zusammenhang mit den Fig. 2 - 4 erläutert.

Wie aus Fig. 2 hervorgeht, umfaßt das erste Kupplungselement 14b ein einen, quer zu einer Steckachse S des ersten Kupplungselements 14b betrachtet, annähernd kreisförmigen Querschnitt aufweisendes Kernteil 14ba und zwei aus dem Kernteil 14ba radial zu der Steckachse S ein- und ausfahrbare Schloßriegel 14bb, die durch einen Schlüssel 14bc betätigbar sind : sie sind durch Federkraft in die Verriegelungsstellung gemäß Figur 2 vorgespannt und können durch Drehen des Schlüssels aus der Verriegelungsstellung in eine Lösestellung zurückgezogen werden.

Zum Festlegen des ersten Kupplungselements 14b ist das erste Halterungselement 20 als eine Halterungshülse 22 mit einer einen, quer zu einer Steckachse S des ersten Halterungselements 20 betrachtet, annähernd kreisförmigen Querschnitt aufweisenden, topfförmigen Ausnehmung 24 ausgebildet, in die das erste Kupplungselement 14b zum Festlegen an dem ersten Halterungselement 20 einfährt. Die topfartige Ausnehmung 24 der Halterungshülse 22 weist eine umlaufende Randeinengung 24a auf, die durch zwei in der Innenumfangsfläche 24b der topfartigen Ausnehmung 24 angeordnete, diametral gegenüberliegende Verriegelungstaschen 26 hinterschnitten ist (vgl. Fig. 2b - d). Durch die beiden Verriegelungstaschen 26 erhält das erste Kupplungselement 14b in dem ersten Halterungselement 20 eine definierte Lage, da es sich hierdurch nicht verdrehen kann. Dabei können die Schloßriegel 14bb identisch und somit auch die Verriegelungstaschen 26 identisch ausgeführt sein oder aber zur Festlegung einer ganz bestimmten Lage, die Schloßbügel 14bb eine unterschiedliche Gestalt und somit auch die Verriegelungstaschen 26 eine unterschiedliche Gestalt aufweisen, wodurch das erste Kupplungselement 14b nur eine einzige Lage in dem ersten Halterungselement 20 einnehmen kann. In die Verriegelungstaschen 26 greifen die beiden Schloßriegel 14bb ein, wenn das erste Kupplungselement 14b in dem ersten Halterungselement 20 festgestellt ist.

Um das Einführen des ersten Kupplungselements 14b zu erleichtern, ist die topfartige Ausnehmung 24 an ihrer Randeinengung 24a mit einer nach außen weisenden, umlaufenden Einweisungsfläche 24c versehen. Die beiden Schloßriegel 14bb weisen ebenfalls je eine nach außen weisende Einweisungsfläche 14bd auf.

An ihrer Außenseite 22a ist die Halterungshülse 22 des ersten Halterungselements 20 mit einem Zentrierabsatz 22b versehen, der das erste Kupplungselement 14b gegenüber dem ersten Halterungselement 20 zentriert. Wie aus Fig. 2 hervorgeht, umgreift dabei das erste Kupplungselement 14b diesen Zentrierabsatz 22b.

Zum betriebsmäßigen Festlegen des ersten Kupplungselements 14b wird dieses mit den Einweisungsflächen 14bd seiner beiden Schloßriegel 14bb voraus an der Einweisungsfläche 24c der Randeinengung 24a der topfartigen Ausnehmung 24 angesetzt. Daraufhin wird es entlang der gemeinsamen Steckachse S von dem ersten Kupplungselement 14b und dem ersten Halterungselement 20 in Richtung einer Einsteckrichtung R in die topfartige Ausnehmung 24 des ersten Halterungselements 20 eingeschoben, wobei durch die Einweisungsfläche 24c der Randeinengung 24a und die beiden Einweisungsflächen 14bd der beiden Schloßriegel 14bb diese, bezogen auf die gemeinsame Steckachse S, radial nach innen verschoben werden, so daß das erste Kupplungselement 14b mit seinem Kernteil 14ba an der Randeinengung 24a vorbei vollständig in die topfartige Ausnehmung 24 eintreten kann. Nachdem die beiden Schloßriegel 14bb an der Randeinengung 24a vorbeigefahren sind, können sie sich wieder nach radial außen bewegen, so daß sie in die beiden Verriegelungstaschen 26 des ersten Halterungselements 20 einfallen. Dies kann einmal durch eine oder mehrere in der Schloßeinrichtung befindliche, nicht weiter dargestellte Federn oder aber durch den Schlüssel 14bc erfolgen. Da sich die beiden Schloßriegel 14bb nur mittels des Schlüssels 14bc nach radial innen in das Kernteil 14ba des ersten Kupplungselements 14b einfahren lassen, ist das erste Kupplungselement 14b in dem ersten Halterungselement 20 dann nach Abzug des Schlüssels 14bc festgestellt.

Zur betriebsmäßigen Entnahme des ersten Kupplungselements 14b aus dem ersten Halterungselement 20 müssen zunächst die beiden Schloßriegel 14bb aus den Verriegelungstaschen 26 mittels des Schlüssels 14bc herausbewegt werden. Anschließend kann das erste Kupplungselement 14b entgegen der Einsteckrichtung R aus dem ersten Halterungselement 20 entnommen werden.

Wie insbesondere aus den Fig. 2a - d hervorgeht, weist das erste Halterungselement 20 zur Festlegung an einem Rahmenrohr 12a,12c,12e des Zweiradrahmens 12 eine Klemmhülse 28 auf, deren Mittellängsachse M die Steckachse S der Halterungshülse 22 senkrecht in einer gemeinsamen Ebene schneidet. Zum Festklemmen der Klemmhülse 28 weist diese an ihren beiden freien Enden 28a,28b jeweils eine Bohrung 28c auf, durch die ein nicht dargestelltes Verbindungselement, vorzugweise eine Schraube, hindurchgesteckt werden kann und mit einem entsprechenden, ebenfalls nicht dargestellten Feststellelement, vorzugsweise einer Mutter, festgelegt werden kann. Wie aus Fig. 2b hervorgeht, können dabei Absätze 28d vorgesehen sein, durch die das Verbindungselement bzw. Feststellelement sich beim Festklemmen der Klemmhülse 28 abstützen. Selbstverständlich ist aber zur Festlegung des Halterungselements 20 auch jede andere Befestigungsart denkbar.

Das erste Halterungselement 20 kann zwei oder mehrteilig ausgeführt sein, es ist jedoch besonders vorteilhaft, wenn es, wie es aus den Fig. 2 - 2d hervorgeht, einteilig, vorzugsweise aus Kunststoff hergestellt ist.

In den Fig. 3a,3b ist das zweite Halterungselement 30 für das zweite Kupplungselement 14c gezeigt.

Das zweite Kupplungselement 14c weist ein Hülsenteil 14ca auf, das mit einer einen, quer zu einer Steckachse S des zweiten Kupplungselements 14c betrachtet, annähernd kreisförmigen Querschnitt aufweisenden, topfartigen Ausnehmung 14cb versehen ist. Von der topfartigen Ausnehmung 14cb wird das andere, erste Kupplungselement 14b mit seinem Kernteil 14ba beim Verbinden der beiden Kupplungselemente 14b,14c aufgenommen. Das Hülsenteil 14ca weist zum gegenseitigen Verriegeln der beiden Kupplungselemente 14b,14c eine vorzugsweise umlaufende Randeinengung 14cc mit einer vorzugsweise umlaufenden Hinterschneidung 14cd auf, hinter die im verriegelten Zustand der beiden Kupplungselemente 14b,14c die Schloßriegel 14bb des ersten Kupplungselements 14b greifen. An ihrer nach außen weisenden Seite ist die Randeinengung 14cc mit einer ebenfalls umlaufenden Einweisungsfläche 14ce versehen.

Wie aus den Fig. 3a,3b hervorgeht, weist das zweite Halterungselement 30 einen zentrisch angeordneten, quer zu einer Steckachse S des zweiten Halterungselements 30 betrachtet, annähernd kreisförmigen Querschnitt aufweisenden Halterungskern 32 und eine um den Halterungskern 32 angeordnete, ovale Vertiefung 33 auf (vgl. Fig. 3d). Der Halterungskern 32 ist an einander im wesentlichen diametral gegenüberliegenden Stellen mit einer kernfesten Klaue 34 und mit einer radial einwärts gegen die Kraft einer Feder 36, vorzugsweise einer Schraubendruckfeder, verschiebbaren, ein Verrastungsmittel bildende Klaue 38 ausgeführt. An der kernfesten Klaue 34 und an der radial einwärts verschiebbaren Klaue 38 sind nach außen weisende Einweisungsflächen 34a,38a angeordnet.

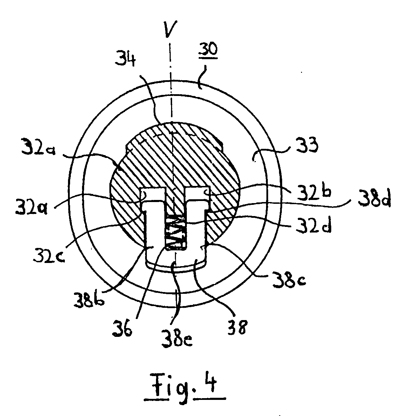

Wie aus Fig. 4 hervorgeht, ist die radial einwärts gegen die Federkraft des Federelements 36 verschiebbare Klaue 38 U-förmig ausgebildet, wobei die beiden U-förmigen Schenkel 38b,38c in entsprechenden Aufnahmen 32a,32b des Halterungskerns 32 geführt sind. Die beiden Aufnahmen 32a,32b weisen je einen Anschlag- und Halteabsatz 32c auf, die mit entsprechenden Absätzen 38d der beweglichen Klaue 38 zusammenwirken, so daß die radial verschiebliche Klaue 38 bei nicht eingesetztem zweiten Kupplungselement 14c aus dem zweiten Halterungselement 30 nicht herausfallen kann. Das Federelement 36 ist dabei von den beiden U-Schenkeln 38b,38c der radial verschieblichen Klaue 38 aufgenommen und stützt sich einmal auf den Querschenkel 38e des U und zum anderen auf einen Mittenabsatz 32d des Halterungskerns 32 ab.

Zum betriebsmäßigen Aufstecken des zweiten Kupplungselements 14c wird dieses zunächst mit seiner Einweisungsfläche 14ce an den Einweisungsflächen 34a,38a der feststehenden Klaue 34 und der radial verschieblichen Klaue 38 des zweiten Halterungselements 30 angesetzt. Beim weiteren Einschieben des Kupplungselements 14c entlang der gemeinsamen Steckachse S von dem zweiten Kupplungselement 14c und dem zweiten Halterungselement 30 in Richtung der Einsteckrichtung R wird die verschiebliche Klaue 38 nach radial innen entgegen der Wirkung des Federelementes 36 verschoben, so daß das zweite Kupplungselement 14c an der kernfesten Klaue 34 und an der radial verschieblichen Klaue 38 vorbei vollständig in die Halterungshülse 32 des zweiten Halterungselements 30 eingeschoben werden kann. Nachdem das zweite Kupplungselement 14c mit seiner Randeinengung 14cc an der beweglichen Klaue 38 vorbeigefahren ist, wird diese in Folge des Federelements 36 wieder nach radial außen verschoben, so daß das zweite Kupplungselement 14b mit dem zweiten Halterungselement 30 verrastet ist. Hierdurch ist das zweite Kupplungselement 14c in dem zweiten Halterungselement 30 sicher festgestellt.

Zum betriebsmäßigen Lösen des zweiten Kupplungselements 14c wird dieses zunächst, bezogen auf Fig. 3a und 3b, in der ovalen Vertiefung 33 des zweiten Halterungselements 30 der beweglichen Klaue 38 und der unbeweglichen Klaue 34 nach radial oben verschoben, wodurch das zweite Kupplungselement 14c die bewegliche Klaue 38 radial einwärts verschiebt. Die ovale Vertiefung 33 ist dabei so ausgebildet, daß die größte Länge des Ovals parallel zu einer Linie V verläuft, wodurch das zweite Kupplungselement 14c beim Lösen nach radial oben verschoben werden kann. Anschließend kann das zweite Kupplungselement 14c aus dem zweiten Halterungselement 30 entgegen der Einsteckrichtung R herausgekippt werden, wobei eine an der radial verschieblichen Klaue 38 befindliche, in das Innere der Vertiefung 33 weisende Ausrastfläche 38f dies unterstützt. Eine solche Ausrastfläche kann ebenfalls an der Randeinengung 14cc des Kupplungselements 14c angeordnet sein und ist mit 14cf bezeichnet.

Wie aus den Fig. 3c - f hervorgeht, besitzt das zweite Halterungselement 30 zur Befestigung an einem Rahmenrohr 12a,12c,12e des Zweiradrahmens eine zu der Klemmhülse 28 des ersten Halterungselements 20 hinsichtlich Aufbau und Material ähnliche Klemmhülse 39.

Wie aus den Zeichnungsfiguren 2 und 3f hervorgeht, ist das erste Halterungselement 20 dem zweiten Kupplungselement 14c und das zweite Halterungselement 30 dem ersten Kupplungselement 14b nachgebildet. Das erste Halterungselement 20 unterscheidet sich dabei von dem zweiten Kupplungselement 14c dahingehend, daß es keine umlaufende Hinterschneidung besitzt sondern lediglich zwei Verriegelungstaschen 26. Selbstverständlich ist es auch möglich, daß das erste Halterungselement 20 mit einer umlaufenden Hinterschneidung versehen werden kann, ebenso wie das zweite Kupplungselement 14c nur mit zwei Taschen ausgebildet sein kann, in die die feststehende Klaue 34 und die radial verschiebliche Klaue 38 des zweiten Halterungselements 30 eingreifen.

Wie bereits im Zusammenhang mit den Figuren 1a und 1b darauf hingewiesen worden ist, kann neben den beiden Halterungselementen 20,30 je nach Länge und Stärke des flexiblen Kabels 14a ein Fesselungselement 40 an dem Zweiradrahmen 12 angebracht werden, um das Kabel 14a des Kabelringschlosses 14 zu halten. Dieses Fesselungselement 40 weist zwei diametral gegenüberliegende konkave Lagerungsausnehmungen 40a, 40b auf, wobei es mit der einen konkaven Lagerungsausnehmung 40a an einem Abschnitt eines Rahmenrohrs des Fahrradrahmens 12 anliegt und mit der anderen konkaven Lagerungsausnehmung 40b das flexible Kabel 14a des Kabelringschlosses 14 aufnimmt.

Zur Festlegung an einem Rahmenrohr 12c weist das Fesselungselement 40 einen ersten elastischen Ring 42, vorzugsweise aus Gummi, auf, der einen Vorsprung 40h umschlingend um das Rahmenrohr 12c herumgeschlungen und in eine Kerbe 40d eingehakt ist. Zum Festlegen des Kabels 14a ist ein weiterer elastischer Ring 44 vorgesehen, der um das Kabel 14a herumgelegt und in eine Kerbe 40c betriebsmäßig lösbar eingehakt werden kann.

Im Bereich des Vorsprungs 40h kreuzen bzw. überlappen sich die beiden Ringe 42,44, wie auch im Bereich der Kerben 40c und 40d. Zur sicheren Fixierung der beiden Ringe 42,44 weist das Fesselungselement 40 darüber hinaus noch einen flexiblen Bügel 40e auf, der mittels einer Schraube 46, die einmal den Bügel 40e durchsetzt und zum anderen in eine entsprechende Bohrung 40f des Fesselungselements 40 eingedreht werden kann, die beiden Ringe 42,44 festklemmt.

Wie insbesondere aus der Fig. 2b und der Fig. 3e hervorgeht, sind die beiden Halterungselemente 20,30 mit je einer Klemmhülse 28,39 versehen. Hierdurch lassen sich die beiden Halterungselemente 20,30, ebenso wie ggf. das Fesselungselement 40, nachträglich an dem Fahrradrahmen 12 bzw. an einem Zweiradrahmen anbringen. Selbstverständlich besteht aber auch die Möglichkeit, daß die beiden Halterungselemente 20,30 sowie ggf. das Fesselungselement 40 werkseitig bei der Herstellung des Zweirades an dessen Rahmen durch beispielsweise Schweißen oder Löten angebracht werden können.

Die im Zusammenhang mit den Fig. 1a - 5e beschriebene Halterungseinrichtung 10 ist an dem Fahrradrahmen 12 in der Weise angebracht, daß die Steckachse S senkrecht zu der von dem Sattelrohr 12a, dem horizontalen Querrohr 12c und dem Schrägrohr 12e gebildete Hauptebene des Fahrradrahmens 12 verläuft. Es ist aber auch eine Anbringung der Halterungseinrichtung 10 an dem Fahrradrahmen 12 denkbar, bei der die Steckachse S in dieser Hauptebene liegt bzw. parallel zu dieser Hauptebene verläuft. Dies kann beispielsweise dadurch erfolgen, daß das Halterungselement 20 in Richtung zu dem Schrägrohr 12e (Fig. 1a) bzw. zu dem Sattelrohr 12a (Fig. 1b) und das Halterungselement 30 zu dem Schrägrohr 12e (Fig. 1a und Fig. 1b) weist. Hierdurch würde in besonders vorteilhafter Weise eine Behinderung des Benutzers des Fahrrades bzw. Zweirades vermieden werden.

Es ist noch darauf hinzuweisen, daß bei der Anbringung der beiden Halterungselemente 20,30 sowie ggf. des Fesselungselements 40 der Ort der exakten Fixierung der beiden Halterungselemente 20,30 sowie des Fesselungselements 40 sich nach der Länge des jeweiligen Ringschlosses richtet. Je nach der Länge des jeweiligen Stranges kann das Ringschloß insgesamt eine gestreckte Lage einnehmen oder aber, wie in den Fig. 1a und 1b gezeigt, so angeordnet sein, daß der Strang einen Kreisbogen bildet. Selbstverständlich ist es aber auch möglich, daß bei einem entsprechend langen Strang dieser nicht nur einen sondern ggf. zwei oder drei Kreisbögen an dem Übergang von dem einen Rahmenrohr zu dem anderen Rahmenrohr bildet.
Es ist darauf hinzuweisen, daß der Fahrradrahmen 12 eine das in Fig. 1a obere Ende des Sattelrohrs 12a mit einer Lagerungsstelle 12f für ein nicht weiter dargestelltes Hinterrad verbindende Strebe 12g sowie eine das Tretlager 12d mit der Lagerungsstelle 12f verbindende Strebe 12h aufweist. An der Lagerungsstelle 12f für das Hinterrad und an der das Sattelrohr 12a mit der Lagerungsstelle 12f verbindenden Strebe 12g ist ein Fahrradgepäck träger 12i angebracht.

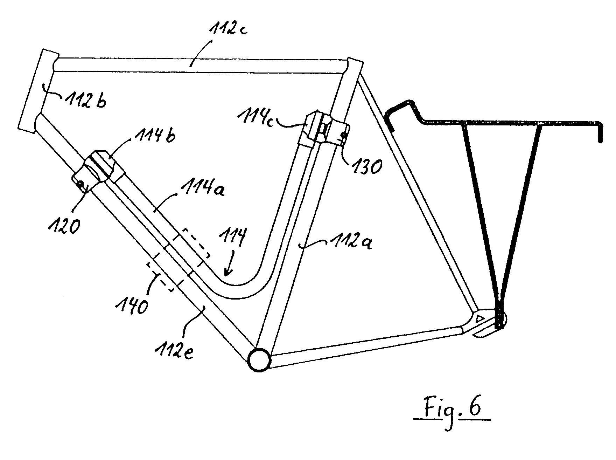

In Figur 6 sind analoge Teile mit gleichen Bezugszeichen versehen wie in Figuren 1b und 2, jeweils vermehrt um die Zahl 100. Sämtliche Teile sind genauso ausgebildet wie in den vorher beschriebenen Ausführungsformen. Es sind lediglich die Halterungselemente 120,130,140 um jeweils 90° gedreht, so daß der Strang 114a in die Raumscheibe zu liegen kommt, welche durch die Rahmenrohre 112a, 112b, 112c und 112e aufgespannt ist.

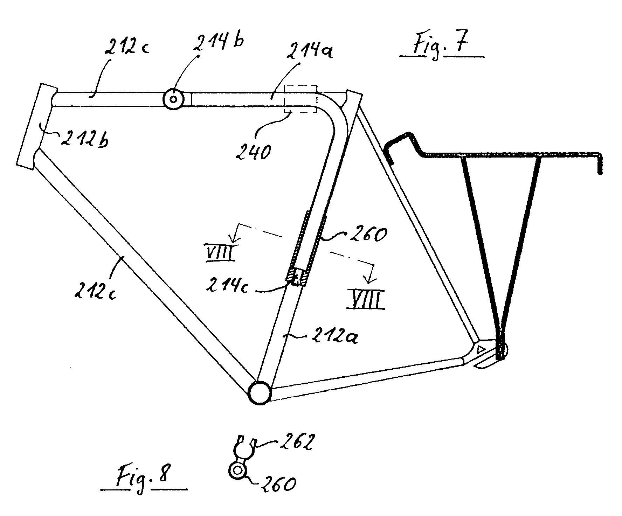

Auch in Figur 7 sind analoge Teile mit gleichen Bezugszeichen versehen wie in den vorangegangenen Figuren, jeweils vermehrt um die Zahl 200. Abweichend von der früheren Ausführungsform ist, daß das Kupplungselement 214c als ein schlanker Schließdorn ausgebildet ist. Hier kann das eine Ende des flexiblen Stranges zur Halterung in ein Halterungsrohr 260 eingesteckt und dort reibschlüssig oder durch eine Verrastung festgelegt werden. Dabei ist die Länge des flexiblen Strangs 214a bei gegebener Position der Halterungselemente variabel. Auch hier sind die Teile 214c, 214b zum Zusammenkuppeln ausgebildet, wobei an dem Kupplungselement 214b ein schlüsselbetätigtes Schließwerk angebracht sein kann oder ein durch Nummern einstellbares betätigbares Schließwerk. Auch die Ausführungsform nach Figur 7 kann so abgewandelt werden, daß der Strang 214a wie in der Ausführungsform nach Figur 6 in der Raumscheibe des Fahrradrahmens liegt.

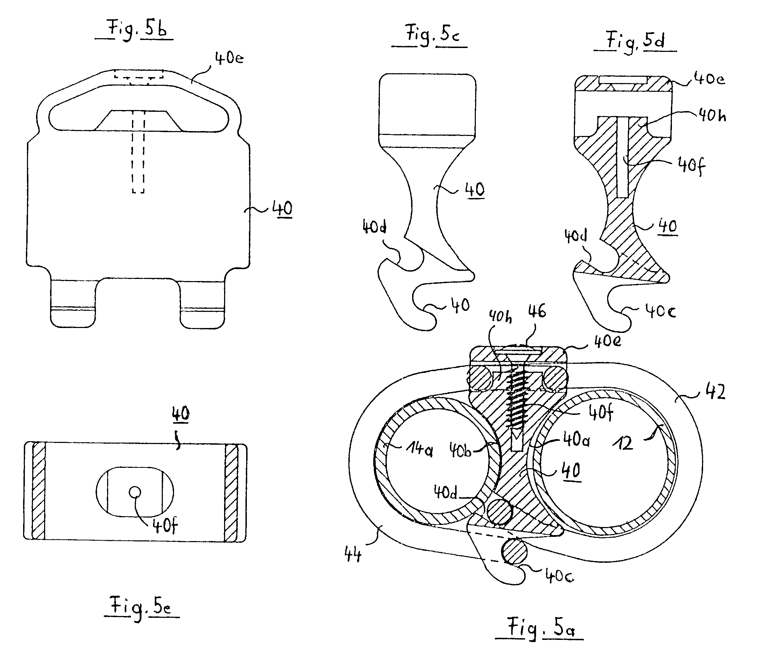

Das Halterungsrohr 260 kann durch eine Klemmschelle 262 an einem Rahmenrohr befestigt sein. Durch die lange Führung des Strangs 214a in dem Halterungsrohr 260 wird eine weitgehende Parallelität zum Rahmenrohr 212a erzwungen. Am Rahmenrohr 212c kann eine weitere Halterung 240 angebracht sein und zwar vorzugsweise so, daß der Strang 214a quer zu seiner Längsrichtung eingefädelt werden kann. Hierzu wird auf die Figuren 5a bis 5e verwiesen.

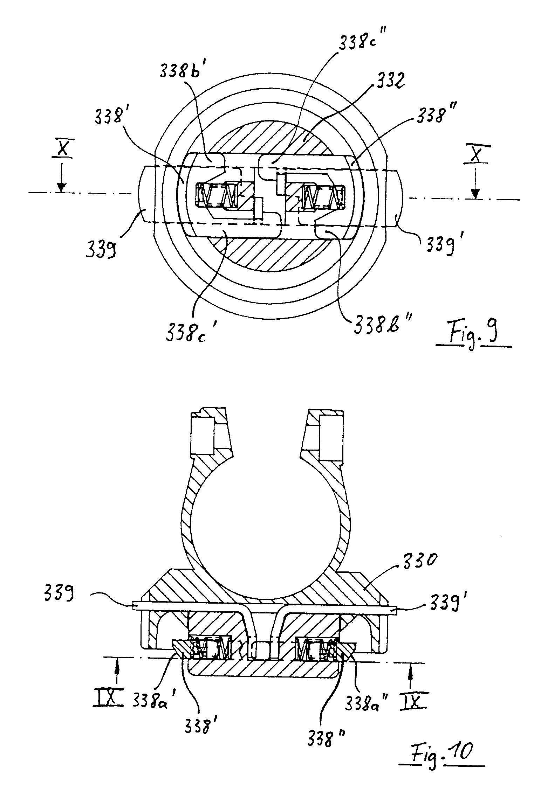

Die Figuren 9 bis 12 zeigen eine modifizierte Ausführungsform des zweiten Halterungselements. Analoge Teile sind mit gleichen Bezugszeichen versehen wie in den Figuren 3a,3b und 4, vermehrt um die Zahl 300. Als Verrastungsmittel dienen hier zwei diametral gegenüberliegende, gegen Federkraft ausrückbare Klauen 338',338''. Die U-Schenkel 338b',338c'; 338b'',338c'' der Klauen Sind ungleich lang ausgeführt, wobei jeweils der kürzere U-Schenkel 338b',338b'' der einen Klaue dem längeren U-Schenkel 338c',338c'' der anderen Klaue gegenübersteht. Dies ermöglicht bei diametral kompakter Ausführung eine genaue Führung beider Klauen 338',338''.

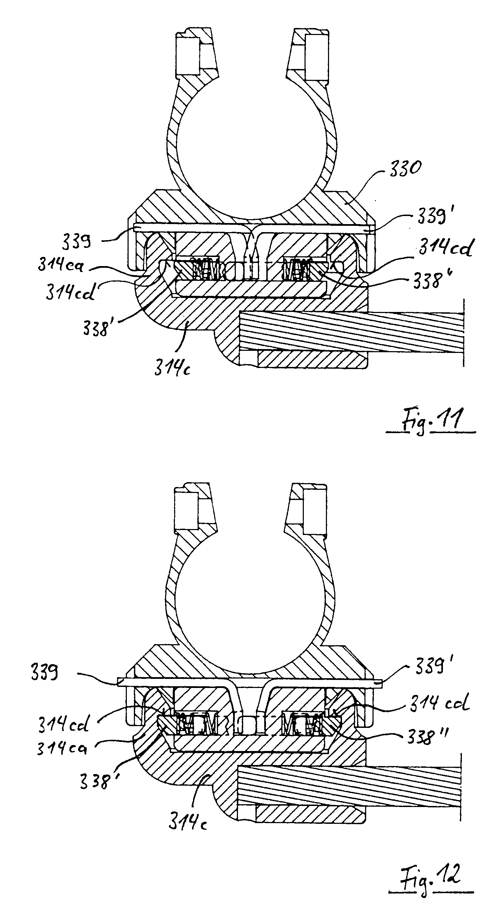

Um das zugehörige Kupplungselement 314c durch einfaches Aufschnappen mit dem Halterungselement 330 verrasten zu können, sind die Klauen 338',338'' mit Einweisungsabschrägungen 338a',338a'' versehen. Beim Aufsetzen des Kupplungselements 314c tritt dieses in Kontakt mit den Einweisungsabschrägungen, wodurch die Klauen in ihre Aufnahmen verdrängt werden und schließlich durch Federkraft hinter die Hinterschneidung 314cd des Kupplungselements 314c schnappen (Figur 12). Zum Lösen der Verrastung sind den Klauen 338', 338'' je ein manuell betätigbares Löseorgan 339,339' zugeordnet, welche durch Gegeneinanderdrücken die Klauen mitnehmen und aus ihrer Verraststellung in ihre Lösestellung (Figur 11) überführen. In der Lösestellung treten die Klauen 338',338'' außer Kontakt mit der Hinterschneidung 314cd und das Kupplungselement 314c kann von dem Halterungselement 330 abgenommen werden.

## Patentansprüche

1. Halterungseinrichtung zur Halterung eines Ringschlosses an einem Zweiradrahmen, wobei das Ringschloß (14) einen flexiblen Strang (14a) sowie je ein Kupplungselement (14b,14c) an beiden Enden des flexiblen Strangs (14a) aufweist und wobei die beiden Kupplungselemente (14a,14b) für das Sichern des jeweiligen Zweirades von der Halterungseinrichtung (20,30) betriebsmäßig vollständig trennbar und miteinander kuppelbar sind,
dadurch gekennzeichnet,
daß an von einander beabstandeten Stellen des Zweiradrahmens Halterungselemente (20,30) für das Ringschloß (14) angebracht sind, von denen mindestens eines zum Einkuppeln eines der beiden Kupplungselemente (14b,14c) ausgebildet ist.

2. Halterungseinrichtung nach Anspruch 1,
dadurch gekennzeichnet,
daß jedem der beiden Kupplungselemente (14b,14c) ein deren Einkuppeln gestattendes Halterungselement (20,30) zugeordnet ist.

3. Halterungseinrichtung nach Anspruch 1 oder 2,
dadurch gekennzeichnet,
daß der flexible Strang (14a;214a) auf mindestens einem Teil seiner Länge von einer Strangaufnahme (40), vorzugsweise in Form eines Strangeinsteckrohrs (260),aufnehmbar ist.

4. Halterungseinrichtung nach Anspruch 3,
dadurch gekennzeichnet,
daß der flexible Strang (214a) mit einem von dem einen Kupplungselement (214b) abgelegenen Endabschnitt in der Strangaufnahme (260) aufnehmbar ist.

5. Halterungseinrichtung nach einem der Ansprüche 1 - 4,
dadurch gekennzeichnet,
daß das mindestens eine zum Einkuppeln eines Kupplungselements (14a,14b) ausgebildete Halterungselement (20,30) in Anpassung an das jeweils andere Kupplungselement (14b,14a) komplementär zu dem einen Kupplungselement (14a,14b) ausgebildet ist.

6. Halterungseinrichtung nach einem der Ansprüche 1 - 5,
dadurch gekennzeichnet,
daß bei Ausrüstung eines (14b) der beiden Kupplungselemente (14b,14c) mit einer Schloßeinrichtung dieses mit der Schloßeinrichtung versehene Kupplungselement (14b) vermittels der Schloßeinrichtung an dem zugehörigen Halterungselement (20) in der Weise feststellbar ist, daß es betriebsmäßig nur bei Betätigung der Schloßeinrichtung von diesem Halterungselement (20) lösbar ist.

7. Halterungseinrichtung nach Anspruch 6,
dadurch gekennzeichnet,
daß das andere (14c) der beiden Kupplungselemente (14b,14c) an dem zugehörigen Halterungselement (30) reibschlüssig oder durch Verrastung jederzeit lösbar feststellbar ist.

8. Halterungseinrichtung nach einem der Ansprüche 1 - 7,
dadurch gekennzeichnet,
daß an dem Zweiradrahmen (12) wenigstens ein an diesem anbringbares oder an diesem fest angebrachtes Fesselungselement (40) angeordnet ist, welches den flexiblen Strang (14a) zwischen dessen beiden Enden lösbar fesselt.

9. Halterungseinrichtung nach einem der Ansprüche 1 - 8,
dadurch gekennzeichnet,
daß die Halterungselemente (20,30) derart angeordnet sind, daß bei Anbringung des Ringschlosses (14) an den Halterungselementen (20,30) der flexible Strang (14a) im wesentlichen parallel zu einer Hauptebene des Zweiradrahmens (12) verläuft.

10. Halterungseinrichtung nach Anspruch 9,
dadurch gekennzeichnet,
daß die Halterungselemente (20,30) derart an dem Zweiradrahmen (12) angebracht sind, daß der flexible Strang (14a) bei Anbringung des Ringschlosses (14) an den Halterungselementen (20,30) wenigstens auf einem Teil seiner Länge parallel zu mindestens einem Rahmenrohr (12a,12c,12e) des Zweiradrahmens (12) verläuft.

11. Halterungseinrichtung nach Anspruch 10,
dadurch gekennzeichnet,
daß der Parallelverlauf des flexiblen Strangs (14a) zu mindestens einem Rahmenrohr (12a,12c,12e) des Zweiradrahmens (12) durch wenigstens ein Fesselungselement (40) gewährleistet ist.

12. Halterungseinrichtung nach einem der Ansprüche 1 - 11,
dadurch gekennzeichnet,
daß mindestens eines der Kupplungselemente (14b,14c) an dem zugehörigen Halterungselement (20,30) unverdrehbar feststellbar ist.

13. Halterungseinrichtung nach einem der Ansprüche 1 - 12,
dadurch gekennzeichnet,
daß von den Halterungselementen (20,30) eines (30) an einem Sattelrohr (12a) und eines (20) an einem horizontalen Querrohr (12c) angebracht ist.

14. Halterungseinrichtung nach einem der Ansprüche 1 - 12,
dadurch gekennzeichnet,
daß von den Halterungselementen (20,30) eines (30) an einem Sattelrohr (12a) und eines (20) an einem ein Tretlager (12d) sowie ein Lenklager (12b) verbindenden Schrägrohr (12e) angebracht ist.

15. Halterungseinrichtung nach einem der Ansprüche 9 - 14,
dadurch gekennzeichnet,
daß die Halterungselemente (20,30) an dem Zweiradrahmen derart angebracht sind, daß der flexible Strang (14) im wesentlichen in einer dem Rahmen (12) benachbarten Raumscheibe liegt.

16. Halterungseinrichtung nach einem der Ansprüche 9 - 14,
dadurch gekennzeichnet,
daß die Halterungselemente (120,130) an dem Zweiradrahmen derart angebracht sind, daß der flexible Strang (114a) im wesentlichen innerhalb einer durch Rahmenrohre (112a,112c,112e) eingeschlossenen Raumscheibe liegt.

17. Halterungseinrichtung nach einem der Ansprüche 1 - 16,
dadurch gekennzeichnet,
daß bei Ausführung eines Kupplungselements (14b) mit einem Kernteil (14ba) sowie radial aus diesem Kernteil (14ba) ausfahrbaren Schloßriegeln (14bb) und Ausführung des anderen Kupplungselements (14c) mit einem das Kernteil (14ba) aufnehmenden und von den Schloßriegeln (14bb) im Bereich einer Randeinengung (14cc) hintergreifbaren Hülsenteil (14ca) das dem einen Kupplungselement (14b) zugehörige Halterungselement (20) als entsprechende Halterungshülse (22) ausgebildet ist.

18. Halterungseinrichtung nach einem der Ansprüche 1 - 17,
dadurch gekennzeichnet,
daß bei Ausführung eines Kupplungselements (14b) mit einem Kernteil (14ba) sowie radial aus diesem Kernteil (14ba) ausfahrbaren Schloßriegeln (14bb) und Ausführung des anderen Kupplungselements (14c;314c) mit einem das Kernteil (14ba) aufnehmenden und von den Schloßriegeln (14bb) im Bereich einer Randeinengung (14cc) hintergreifbaren Hülsenteil (14ca;314ca) das dem anderen Kupplungselement (14c;314c) zugehörige Halterungselement (30;330) mit einem entsprechenden Halterungskern (32;332) ausgebildet und mit radial beweglichen Verrastungsmitteln (38;338',338'') ausgeführt ist.

19. Halterungseinrichtung nach Anspruch 18,
dadurch gekennzeichnet,
daß der Halterungskern (32) an einander im wesentlichen diametral gegenüberliegenden Stellen mit einer kernfesten Klaue (34) und mit einer radial einwärts gegen Federkraft verschiebbaren Klaue (38) ausgeführt ist, daß Einweisungsflächen (14ce;34a,38a) an dem Hülsenteil (14ca) und/oder an den Klauen (34,38) des Halterungskerns (32) angebracht sind, welche ein Aufstecken des Hülsenteils (14ca) auf den Halterungskern (32) gestatten, daß das Hülsenteil (14ca) zum Lösen von dem Halterungskern (32) gegenüber diesem in Richtung einer Verbindungsslinie (V) der beiden Klauen (34,38) gegen die Wirkung der federvorgespannten Klaue (38) verschiebbar ist und daß an der beweglichen Klaue (38) und/oder dem Hülsenteil (14ca) gegebenenfalls Ausrastflächen (38f) vorgesehen sind.

20. Halterungseinrichtung nach Anspruch 18,
dadurch gekennzeichnet, daß die Verrastungsmittel (338',338'') mit manuell betätigbaren Löseorganen (339,339') verbunden sind.

21. Halterungseinrichtung nach Anspruch 20,
dadurch gekennzeichnet,
daß zwei einander diametral gegenüberliegende gegen Federkraft ausrückbare Klauen (338',338'') mit je einem Löseorgan (339,339') verbunden sind.

22. Halterungseinrichtung nach einem der Ansprüche 1 - 21,
dadurch gekennzeichnet,
daß der flexible Strang (14a) von einem Kabel, vorzugsweise einem Stahldrahtkabel, gebildet ist.

23. Halterungseinrichtung nach einem der Ansprüche 1 bis 22,
dadurch gekennzeichnet,
daß eine Strangaufnahme von einem an einem Rahmenrohr (12) befestigbaren oder befestigten Träger (40) eines elastischen Rings (44) gebildet ist, wobei dieser elastische Ring (44) um den flexiblen Strang (14a) herumschlingbar und an dem Träger (40) lösbar einhakbar ist.

24. Halterungseinrichtung nach Anspruch 23,
dadurch gekennzeichnet,
daß der Träger (40) durch einen weiteren elastischen Ring (42) an dem jeweiligen Rahmenrohr (12) befestigbar ist, wobei dieser weitere elastische Ring (42) um das jeweilige Rahmenrohr (12) herumschlingbar und an dem Träger (40) festlegbar ist.

25. Halterungselement für eine Halterungseinrichtung nach einem der Ansprüche 1 - 24.

## Claims

1. Mounting device for mounting a circular lock onto a bicycle frame, in which the circular lock (14) has a flexible cable (14a) and a coupling member (14b, 14c) at each end of the flexible cable (14a) and in which both coupling members (14b, 14c) can be completely separated from the mounting device (20, 30) and can be coupled together to lock the respective bicycle,
characterized in that
mounting elements (20, 30) for the circular lock (14) are attached onto the bicycle frame at intervals, of which at least one is designed to connect with one of the two coupling members (14b, 14c).

2. The mounting device according to claim 1,
characterized in that
a mounting element (20, 30) is assigned to each of the two coupling members (14b, 14c) to permit their connection.

3. The mounting device according to claim 1 or 2,
characterized in that
the flexible cable (14a; 214a) can be supported for at least part of its length by a cable mount (40), preferably in the form of a cable inset tube (260).

4. The mounting device according to claim 3,
characterized in that
the flexible cable (214a) can be supported in the cable mount (260) by an end section positioned far apart from the first coupling member (214b).

5. The mounting device according to one of claims 1 - 4,
characterized in that
the at least one mounting element (20, 30) designed to connect with a coupling member (14a, 14b) is constructed to interlock with the respective other coupling member (14b, 14a) complementary to the first coupling member (14a, 14b).

6. The mounting device according to one of claims 1-5,
characterized in that,
on furnishing one (14b) of the two coupling members (14b, 14c) with a locking device the coupling member (14b) furnished with the locking device is securable to the respective mounting element (20) by means of the locking device in such a way that it can only be disconnected from the mounting element (20) by activating the locking device.

7. The mounting device according to claim 6, characterized in that the second (14c) of the two coupling members (14b, 14c) can be secured to the respective mounting element (30) by friction or by locking and is disconnectable at any time.

8. The mounting device according to one of claims 1-7,
characterized in that
at least one locking member (40) is mounted on the bicycle frame (12) which can be fastened or securely attached thereto and which disconnectably secures the flexible cable (14a) between both of its ends.

9. The mounting device according to one of claims 1-8,
characterized in that
the mounting elements (20, 30) are arranged such that on attaching the circular lock (14) onto the mounting elements (20, 30) the flexible cable (14a) is essentially parallel to the main plane of the bicycle frame (12).

10. The mounting device according to claim 9,
characterized in that
the mounting elements (20, 30) are attached to the bicycle frame (12) such that on attaching the circular lock (14) onto the mounting elements (20, 30) for at least a part of its length the flexible cable (14a) runs parallel to at least one bar (12a, 12c, 12e) of the bicycle frame (12).

11. The mounting device according to claim 10
characterized in that
the parallel position of the flexible cable (14a) to at least one bar (12a, 12c, 12e) of the bicycle frame (12) is maintained by at least one locking member (40).

12. The mounting device according to one of claims 1-11,
characterized in that
at least one of the coupling members (14b, 14c) is non-rotatably connectable to the corresponding mounting element (20, 30).

13. The mounting device according to one of claims 1-12,
characterized in that
of the mounting elements (20, 30) one (30) is attached to the saddle bar (12a) and one (20) is attached to a horizontal cross bar (12c).

14. The mounting device according to one of claims 1-12,
characterized in that
of the mounting elements (20, 30) one (30) is attached to a saddle bar (12a) and one (20) is attached to a diagonal bar (12e) connecting the peddle bearing (12d) and the steering bearing (12b).

15. The mounting device according to one of claims 9-14,
characterized in that
the mounting elements (20, 30) are attached to the bicycle frame such that the flexible cable (14) lies essentially in a space adjacent to the frame (12).

16. The mounting device according to one of claims 9-14,
characterized in that
the mounting elements (120, 130) are fixed to the bicycle frame such that the flexible cable (114a) lies essentially in a space enclosed by bars of the frame (112a, 112c, 112e).

17. The mounting device according to one of claims 1-16,
characterized in that
in the design of one coupling member (14b) with a core part (14ba) and locking bars (14bb) radially removable from said core part (14ba) and the design of the other coupling member (14c) with a sleeve part (14ca) which receives the core part (14ba) and is held from the rear by the locking bars (14bb) in the area of an edge constraint (14cc), the mounting element (20) belonging to the one coupling member (14b) has the form of a corresponding mounting sleeve (22).

18. The mounting device according to one of claims 1-17,
characterized in that
in the design of one coupling member (14b) with a core part (14ba) and locking bars (14bb) radially removable from said core part (14ba) and the design of the other coupling member (14c) with a sleeve part (14ca) which receives the central part (14ba) and is held from the rear by the locking bars (14bb) in the area of an edge constraint (14cc), the mounting element (30; 330) belonging to the other coupling member (14c; 314c) is formed by a corresponding mounting core (32; 332) and radially movable locking means (38; 338', 338'').

19. The mounting device according to claim 18,
characterized in that
the mounting core (32) is formed by a core-tight catch (34) and a catch (38) which is movable radially inwards against an elastic force at essentially diametrically opposite points, that orientation surfaces (14ce; 34a, 38a) are attached to the sleeve part (14ca) and/or the catches (34, 38) of the mounting core (32) which permit the sleeve part (14ca) to be fitted onto the mounting core (32), that the sleeve part (14ca) is movable to be disconnected from the mounting core (32) in relation to this in the direction of a connecting line (V) of both catches (34, 38) against the effect of the elastic preloaded catch (38) and that disengaging surfaces (38f) are provided on the movable catch (38) and/or the sleeve part (14ca).

20. The mounting device according to claim 18,
characterized in that
the locking means (338', 338'') are connected to manually operated disconnecting members (339, 339').

21. The mounting device according to claims 20,
characterized in that
two disconnectable catches (338', 338'') diametrically opposite to one another against an elastic force are each attached to a disconnecting member (339, 339').

22. The mounting device according to one of claims 1-21,
characterized in that
the flexible cable (14a) is preferably a steel wire cable.

23. The mounting device according to one of claims 1-22,
characterized in that
a cable mount is formed by a carrier (40) of an elastic ring (44) attachable or attached to a bar of the frame (12) whereby the elastic ring (44) can be looped around the flexible cord (14a) and disconnectably hooked on the carrier (40).

24. The mounting device according to claim 23
characterized in that
the carrier (40) can be secured by an additional elastic ring (42) on the respective bar of the frame (12) whereby the additional elastic ring (42) can be looped around the respective bar of the frame (12) and fixed to the carrier (40).

25. A mounting element for a mounting device according to one of claims 1-24.

## Revendications

1. Dispositif de fixation pour fixer un antivol à boucle sur un cadre de bicyclette, l'antivol à boucle (14) présentant un tronçon flexible (14a) ainsi qu'un élément de couplage (14b, 14c) à chacune des deux extrémités du tronçon flexible (14a) et les deux éléments de couplage (14a, 14b) étant susceptibles d'être totalement séparés fonctionnellement l'un de l'autre et couplés l'un à l'autre, pour assurer la bicyclette respective au moyen du dispositif de fixation (20, 30), caractérisé en ce qu'en deux points, espacés l'un de l'autre, du cadre de bicyclette sont montés des éléments de fixation (20, 30) pour l'antivol à boucle (14), dont au moins l'un est réalisé pour s'accoupler à l'un des deux éléments de couplage (14b, 14c).

2. Dispositif de fixation selon la revendication 1, caractérisé en ce qu'à chacun des deux éléments de couplage (14b, 14c) est associé un élément de fixation (20, 30), permettant son accouplement.

3. Dispositif de fixation selon la revendication 1 ou 2, caractérisé en ce que le tronçon flexible (14a; 214a) peut être logé sur au moins une partie de sa longueur, dans un élément récepteur (40), se présentant de préférence sous la forme d'un tube d'insertion du tronçon flexible (260).

4. Dispositif de fixation selon la revendication 3, caractérisé en ce que le tronçon flexible (214a) peut être logé, par une section d'extrémité décalée d'un premier élément de couplage (214b), dans l'élément récepteur (260).

5. Dispositif de fixation selon l'une des revendications 1 à 4, caractérisé en ce que le ou chaque élément de fixation (20, 30) réalisé pour accoupler un élément de couplage (14a, 14b) est réalisé adapté au deuxième élément de couplage (14b, 14a), complémentaire du premier élément de couplage (14a, 14b).

6. Dispositif de fixation selon l'une des revendications 1 à 5, caractérisé en ce que, lors de l'équipement de l'un (14b) des deux éléments de couplage (14b, 14c) avec un dispositif à serrure, cet élément de couplage (14b) pourvu du dispositif à serrure peut être fixé sur l'élément de fixation (20) afférent, au moyen du dispositif à serrure, de manière à pouvoir être désolidarisé fonctionnellement de cet élément de fixation (20) seulement en cas d'actionnement du dispositif à serrure.

7. Dispositif de fixation selon la revendication 6, caractérisé en ce que l'autre (14c) des deux éléments de couplage (14b, 14c) peut être à tout moment fixé d'une façon désolidarisable, sur l'élément de fixation (30) afférent, par une liaison par friction ou par encliquetage.

8. Dispositif de fixation selon l'une des revendications 1 à 7, caractérisé en ce que sur le cadre de bicyclette (12) est disposé au moins un élément de retenue (40) pouvant être monté sur celui-ci, ou bien monté à demeure sur lui, assurant une retenue, désolidarisable, du tronçon flexible (14a) entre ses deux extrémités.

9. Dispositif de fixation selon l'une des revendications 1 à 8, caractérisé en ce que les éléments de fixation (20, 30) sont disposés de manière que, lors du montage de l'antivol à bouche (14) sur les éléments de fixation (20, 30), le tronçon flexible (14a) s'étende sensiblement parallèlement à un plan principal du cadre de bicyclette (12).

10. Dispositif de fixation selon la revendication 9, caractérisé en ce que les éléments de fixation (20, 30) sont montés sur le cadre de bicyclette (12) de manière que le tronçon flexible (14a) s'étende sur une partie de sa longueur parallèlement à au moins un tube de cadre (12a, 12c, 12e) du cadre de bicyclette (12) lors du montage de l'antivol à bouche (14) sur l'élément de fixation (20, 30).

11. Dispositif de fixation selon la revendication 10, caractérisé en ce que l'allure parallèle du tronçon flexible (14a) par rapport à au moins un tube de cadre (12a, 12c, 12e) du cadre de bicyclette (12) est assurée au moyen d'au moins un élément de retenue (40).

12. Dispositif de fixation selon l'une des revendications 1 à 11, caractérisé en ce qu'au moins l'un des éléments de couplage (14b, 14c) peut être fixé, bloqué en rotation, sur l'élément de fixation (20, 30) afférent.

13. Dispositif de fixation selon l'une des revendications 1 à 12, caractérisé en ce que, parmi les éléments de fixation (20, 30), l'un (30) est monté sur un tube de selle (12a) et l'un (20) est monté sur un tube transversal (12c) horizontal.

14. Dispositif de fixation selon l'une des revendications 1 à 12, caractérisé en ce que, parmi les éléments de fixation (20, 30), l'un (30) est monté sur un tube de selle (12a) et l'un (20) sur un tube oblique (12e) qui relie à un palier de pédalier (12d) à un palier de fourche de direction (12b).

15. Dispositif de fixation selon l'une des revendications 9 à 14, caractérisé en ce que les éléments de fixation (20, 30) sont montés sur le cadre de bicyclette de manière que le tronçon flexible (14) soit situé sensiblement dans un disque spatial voisin du cadre (12).

16. Dispositif de fixation selon l'un des revendications 9 à 14, caractérisé en ce que les éléments de fixation (120, 130) sont montés sur le cadre de bicyclette de manière que le tronçon flexible (114a) soit situé sensiblement à l'intérieur d'un volume plat défini par les tubes de cadre (112a, 112c, 112e).

17. Dispositif de fixation selon l'une des revendications 1 à 16, caractérisé en ce qu'en cas de réalisation d'un élément de couplage (14b) avec une partie fouillot (14ba), ainsi que des pênes de serrure (14bb) déployables radialement hors de cette partie fouillot (14ba) et de réalisation de l'autre élément de couplage (14c) avec une partie douille (14ca) recevant la partie fouillot (14ba) et pouvant être saisie par l'arrière par les pênes de serrure (14bb), dans la zone d'un rétrécissement de bordure (14cc), l'élément de fixation (20) afférent à un élément de couplage (14b) est réalisé sous forme de douille de fixation (22) correspondante.

18. Dispositif de fixation selon l'une des revendications 1 à 17, caractérisé en ce qu'en cas de réalisation d'un élément de couplage (14b) avec une partie fouillot (14ba), ainsi que des pênes de serrure (14bb) déployables radialement hors de cette partie fouillot (14ba) et de réalisation de l'autre élément de couplage (14c; 314c) avec une partie douille (14ca; 314ca) recevant la partie fouillot (14ba) et pouvant être saisie par l'arrière par les pênes de serrure (14bb), dans la zone d'un rétrécissement de bordure (14cc), l'élément de fixation (3; 330) afférent à l'autre élément de couplage (14c; 314c) est réalisé avec un noyau de fixation (32; 332) correspondant et avec des éléments d'encliquetage (38; 338', 338'') mobiles radialement.

19. Dispositif de fixation selon la revendication 18, caractérisé en ce que la partie de fixation (2) est réalisée en des points sensiblement diamétralement opposés l'un à l'autre, avec une griffe (34) fixée au fouillot et avec une griffe (38) déplaçable radialement vers l'intérieur à l'encontre de la force d'un ressort, en ce que des surfaces de guidage (14ce; 34a, 38) sont ménagées sur la partie de douille (14ca) et/ou sur les griffes (34, 38) du noyau de fixation (32), qui permettent un enfichage de la partie douille (14ca) sur le noyau de fixation (32), en ce que la partie de douille (14ca) peut être déplacée pour obtenir la désolidarisation par rapport au noyau de fixation (32), par rapport à cette dernière, dans la direction d'une ligne de liaison (V) des deux griffes (34, 38) à l'encontre de l'effet de la griffe (38) précontrainte par un ressort, et en ce que, sur la griffe mobile (38) et/ou la partie de douille (14ca), sont, le cas échéant, prévues des surfaces de désengagement (38f).

20. Dispositif de fixation selon la revendication 18, caractérisé en ce que les moyens d'encliquetage (338', 338'') sont reliés à des organes de désolidarisation (339, 339') pouvant être actionnés manuellement.

21. Dispositif de fixation selon la revendication 20, caractérisé en ce que deux griffes (338', 338'') pouvant être dégagées à l'encontre de la force d'un ressort et situées diamétralement à l'opposé l'une de l'autre sont reliés chacune à un organe de désolidarisation (339, 339').

22. Dispositif de fixation selon l'une des revendications 1 à 21, caractérisé en ce que le tronçon flexible (14a) est constitué par un câble, de préférence un câble en fil d'acier.

23. Dispositif de fixation selon l'une des revendications 1 à 22, caractérisé en ce qu'un élément récepteur est constitué par un support (40), pouvant être fixé ou étant fixé sur un tube de cadre (12), et pourvu d'un anneau élastique (44), cet anneau élastique (44) pouvant être enlacé autour du tronçon flexible (14a) et accroché de façon amovible sur le support (40).

24. Dispositif de fixation selon la revendication 23, caractérisé en ce que le support (40) peut être fixé au moyen d'un anneau élastique supplémentaire (42) sur le tube de cadre respectif, cet anneau élastique supplémentaire (42) pouvant être enlacé autour du tube de cadre (12) respectif et pouvant être fixé sur le support (40).

25. Elément de fixation pour un dispositif de fixation selon l'une des revendications 1 à 24.
